# EUROPEAN PATENT SPECIFICATION

(11) **EP 3 720 323 B1**
(45) Date of publication and mention of the grant of the patent: **30.03.2022**
(21) Application number: 19703339.2
(22) Date of filing: 11.02.2019
(51) Int. Cl.: A47J 31/44

(54) **JUG FOR HEATING AND/OR FROTHING MILK**
KANNE ZUM ERWÄRMEN UND / ODER AUFSCHÄUMEN VON MILCH
POT POUR CHAUFFER ET/OU FAIRE MOUSSER DU LAIT

(30) Priority: 13.02.2018 IT 201800002659
(43) Date of publication of application: 14.10.2020
(73) Proprietor: De'Longhi Appliances S.r.l., 31100 Treviso (IT)
(72) Inventor: DE' LONGHI, Giuseppe, 31100 Treviso (IT); EVANGELISTI, Paolo, 31100 Treviso (IT); NICOLETTI, Nicola, 31100 Treviso (IT)
(74) Representative: Rapisardi, Mariacristina
(86) International application number: PCT/EP2019/053241
(87) International publication number: WO 2019/158458

(56) References cited:
- WO-A1-2014/087280
- WO-A1-2016/005304
- WO-A1-2017/067972
- WO-A2-2010/044116
- GB-A- 2 311 332

## Description

The present invention relates to a jug for heating and/or frothing milk, particularly to be connected to a coffee machine.

In coffee machines that include the possibility of preparing hot milk or latte macchiato or cappuccino with the aid of a jug which is suitable for heating and/or frothing milk, the space requirements of the jug positioned on the cup resting surface can limit the space on the cup rest for the positioning of the cups. Consequently in the coffee machines known today, the jug is often used for dispensing in single cups, as it is difficult to correctly position more than one cup on the cup resting surface precisely because of the presence of the jug.

< WO 2017/067972 A1 discloses a beverage system able to provide different beverage recipes.>

The technical task of the present invention is, therefore, to provide a jug for heating and/or frothing milk, particularly to be connected to a coffee machine, which can obviate the above-described technical drawbacks of the prior art. Within the scope of this technical task, an object of the invention is to provide a jug for heating and/or frothing milk, particularly to be connected to a coffee machine, which makes it possible to dispense hot and/or frothed milk into a cup or simultaneously into multiple cups positioned on the cup resting surface below the external coffee dispenser of the coffee machine.

Another object of the invention is to provide a jug for heating and/or frothing milk, particularly to be connected to a coffee machine, which has a simple and robust construction and safe and reliable operation. According to the present invention, the technical task as well as these and other objects are achieved by providing a jug for heating and/or frothing milk, comprising a container for containing milk which is provided with a box-shaped cover at the top housing a chamber for heating and/or frothing milk withdrawn from said container, characterised in that it comprises articulated connecting means between said cover and said container, said jug having a plurality of configurations in each of which said cover has a different arrangement with respect to said container, each configuration of said jug being associated with a corresponding state of said articulated connecting means.

The special construction of the jug with a variable configuration makes it possible, when required, to adapt the availability of free space on the cup rest so as to allow the positioning on the same of one or more cups for the dispensing of one or more drinks.

For example, it is possible to dispense a single drink with milk and coffee, or a drink with milk and coffee and a drink with just coffee simultaneously, or two drinks with milk and coffee simultaneously.

Advantageously said articulated connecting means comprise a rotation pin. Preferably said cover has a bottom closure wall and said container has a top closure wall constrained to said bottom closure wall of said cover.

Preferably said rotation pin constrains said top closure wall of said container to said bottom closure wall of said cover.

Preferably said bottom closure wall of said cover and said top closure wall of said container are flat, parallel walls, and said rotation pin is orthogonal to their lying plane.

Advantageously configurations with different space requirements of said jug correspond to different rotation angles between said bottom closure wall of said cover and said top closure wall of said container.

Preferably said chamber is connected to a milk supply tube which extends into said milk container and is placed through a first through hole of said bottom closure wall of said cover and through a second through hole of said top closure wall of said container.

Preferably said rotation pin is formed by a hollow cylindrical protrusion of said bottom wall of said cover that surrounds said first hole and extends through said second hole.

Preferably said second hole has a first portion joined to said cylindrical protrusion. Preferably said cylindrical protrusion has one or more members on the outside for coupling to said top closure wall of said container.

Preferably said second hole has a second portion serving for the introduction and extraction of said cylindrical protrusion from said first portion for the connection and disconnection of said cover from said container.

Preferably said top closure wall of said container has a collar which is elastically yielding for retaining said cylindrical protrusion in said first portion of said second hole.

Preferably said jug has at least one rotation stroke limiter between said top closure wall of said container and said bottom closure wall of said cover.

Preferably said bottom closure wall of said cover and said top closure wall of said container are constrained in an eccentric position by said rotation pin.

According to the invention, said cover has an inlet for steam into said chamber and an outlet for hot and/or frothed milk from said chamber.

It is also alternatively possible that the cover is equipped with independent means for heating the milk, for example of an electric type.

The present invention also relates to a machine that has such a jug for heating and/or frothing milk.

Preferably the coffee machine comprises a cup resting surface, an external coffee dispenser positioned above said cup resting surface, and a steam dispensing nozzle positioned above said cup resting surface and to the side of said external coffee dispenser and connected to said inlet of steam into said chamber, being equipped with a plurality of different areas for resting said container on said cup resting surface, each resting area being associated with a corresponding configuration of said jug.

The present invention also relates to a dispensing method that envisages freeing an additional portion of said cup resting surface by changing the state of said articulated connecting means when the number and/or size of the cups resting on said cup rest must be increased in order to simultaneously dispense the beverages. Further characteristics and advantages of the invention will more fully emerge from the description of preferred but not exclusive embodiments of the jug according to the invention, illustrated by way of indicative and non-limiting example in the accompanying drawings, in which:
figure 1 shows a coffee machine with a jug in a configuration which is suited to dispensing a beverage with milk and coffee in a cup;
figure 2 shows a coffee machine with a jug in a configuration which is suited to dispensing a beverage with milk and coffee in a cup and the simultaneous dispensing of a beverage with coffee in another cup;
figure 3 shows the jug separate from the coffee machine;
figure 4 shows an exploded view of the jug;

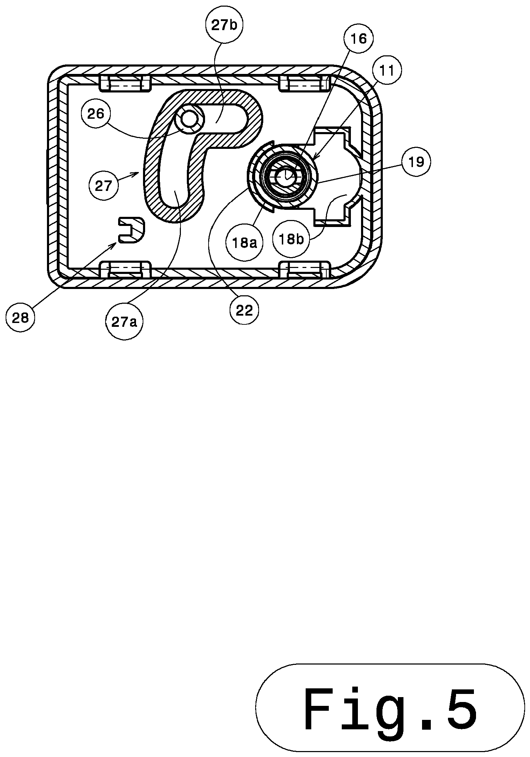

figure 5 shows a plan view of a cross section of the jug at the height of the bottom closure wall of the cover and the top closure wall of the container;

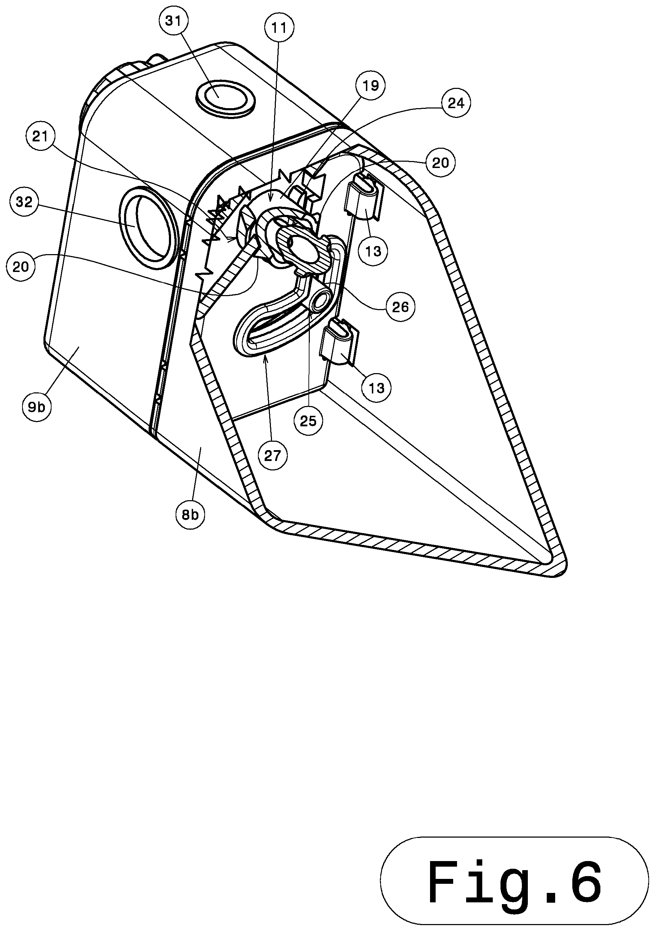

figure 6 shows an oblique section of the inclined jug;

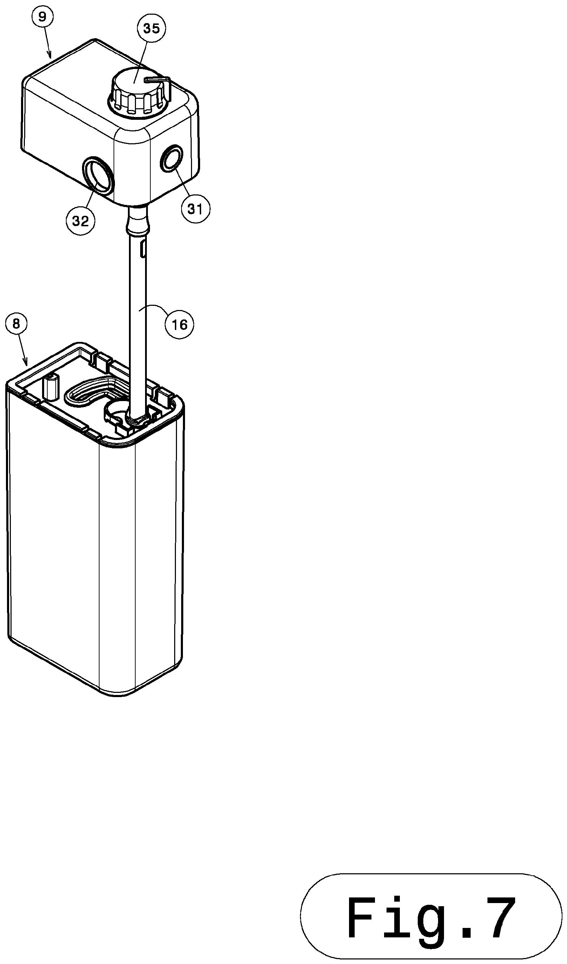

figure 7 shows the jug with the cover separated from the container;

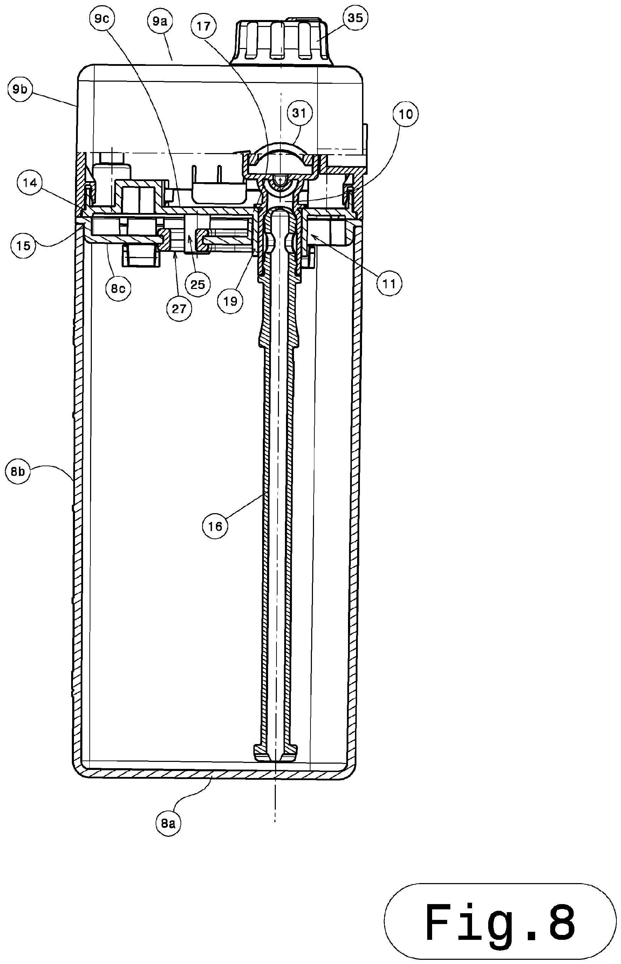

figure 8 shows a vertical section of the jug in the configuration illustrated in figure 1;

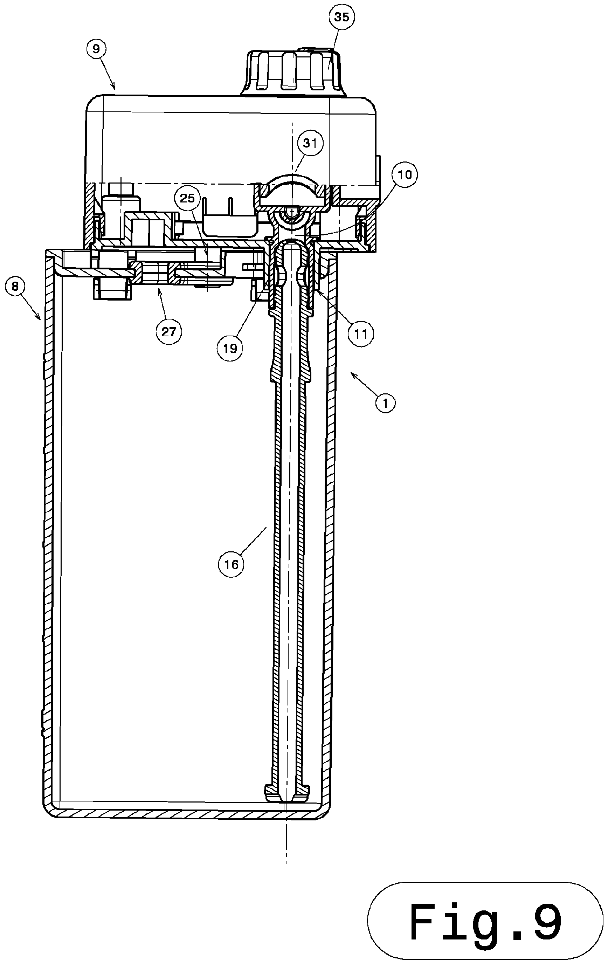

figure 9 shows a vertical section of the jug in the configuration illustrated in figure 2;
figure 10 shows an axonometric view of the jug in the configuration illustrated in figure 1;
figure 11 shows an axonometric view of the jug in the configuration illustrated in figure 2;
figure 12 shows the coffee machine with a jug in a configuration suited to dispensing a beverage with milk and coffee in a cup, wherein the jug has a variant of the external heated and/or frothed milk dispensing terminal;
figure 13 shows the coffee machine with a jug in a configuration suited to dispensing a beverage with milk and coffee in a cup and the simultaneous dispensing of a beverage with coffee in another cup, wherein the jug has a variant of the external heated and/or frothed milk dispensing terminal illustrated in figure 12.

With reference to the above figures, a jug 1 is shown for the heating and/or frothing of milk, which can be associated with a coffee machine 2.

In a known manner, the coffee machine 2 frontally has a cup 6 resting surface 3 which is surmounted by an external coffee dispenser 4 having for example two dispensing spouts 5.

In particular, the external coffee dispenser 4 can be, as shown, of the type which is adjustable in height.

In a known manner, the coffee machine 2 also comprises a brewing circuit (not shown) formed in cascade by a water supply pump, a boiler and a brewing unit where the hot water infuses the load of coffee.

Lastly, the coffee machine 2 has, still at the front above the cup resting surface 3, but in a position that is laterally distorted by the external coffee dispenser 4, an external nozzle 7 for dispensing the steam 7 generated by a relative steam production circuit.

The jug 1 comprises a container 8 for containing the milk, equipped with a box-shaped cover 9 on top housing a chamber 10 for heating and/or frothing milk withdrawn from the container 8.

Advantageously the jug 1 is provided with articulated connecting means between the cover 9 and the container 8 which allow the jug 1 to achieve a plurality of configurations in each of which the cover 9 has a different arrangement with respect to the container 8.

In practice each configuration of the jug 1 is associated with a corresponding state of the articulated connecting means.

The articulated connecting means comprise a rotation pin 11 which allows a relative rotation between the cover 9 and the container 8.

The box-shaped cover 9 has a top wall 9a, a side wall 9b and a bottom closure wall 9c.

The top wall 9a and the side wall 9b are made in a single piece, while the bottom closure wall 9c is an element which is structurally separated and independent, fixed for example by screws 12 to the rest of the cover 9.

The shape of the box-shaped cover 9 can be any, for example cylindrical or prismatic with a quadrangular base, as shown.

The container 8 has a bottom wall 8a, a side wall 8b and a top closure wall 8c.

The bottom wall 8a and the side wall 8b are made in a single piece, while the top closure wall 8c is an element which is structurally separated and independent, removably fixed for example by means of elastic hooks 13, to the rest of the container 8.

The shape of the container 8 can be any, for example cylindrical or prismatic with a quadrangular base, as shown.

The shape of the cover 9 can also be the same as that of the container 8, except in height, such that in a specific state of the articulated connecting means they can be perfectly superimposed with their side walls 8b, 9b arranged with one on the prolongation of the other.

The bottom closure wall 9c of the cover 9 and the closure wall 8c of the container 8 are connected to one another by means of the rotation pin 11.

More precisely the bottom closure wall 9c of the cover 9 and the closure wall 8c of the container 8 are flat, parallel walls, and the rotation pin 11 is orthogonal to their lying plane.

The bottom closure wall 9c of the cover 9 and the closure wall 8c of the container 8 have perimeter frames in contact relief 14, 15 that keep them distanced from each other.

Advantageously configurations with different space requirements of the jug 1 correspond to different rotation angles between the bottom closure wall 9c of the cover 9 and the top closure wall 8c of the container 8.

In particular a use configuration is obtained by matching the frames 14, 15 and a different use configuration is obtained by offsetting the frames 14, 15.

To amplify the difference between the various configurations of the jug 1, the rotation pin 11 constrains the bottom closure wall 9c of the cover 9 and the top closure wall 8c of the container 8 in an eccentric position.

The chamber 10 is connected to a milk supply tube 16 which extends into the container 8 and is arranged through a first through hole 17 of the bottom closure wall 9c of the cover 9 and through a second through hole 18 of the top closure wall 8c of the container 8.

In detail, the rotation pin 11 is formed by an axially hollow cylindrical protrusion 19 of the bottom wall 9c of the cover 9 which surrounds the first hole 17 and extends through the second hole 18.

The second hole 18 has a first portion 18a joined to the hollow cylindrical protrusion 19.

The second hole 18 also has a second portion 18b serving for the introduction and extraction of the hollow cylindrical protrusion 19 from the first portion 18a for the rapid connection and disconnection of the cover 9 from the container 8.

The hollow cylindrical protrusion 19 externally has one or more members 20 for coupling to the top closure wall 8c of the container 8.

The coupling members 20 are positioned at the base of the hollow cylindrical protrusion 19 and engage on the lower side of the top closure wall 8c of the container 8.

The top closure wall 8c of the container 8 has a collar 21 which is elastically yielding for retaining the hollow cylindrical protrusion 19 in the first portion 18a of the second hole 18.

The collar 21 is formed by an open, curved plate 22 that extends orthogonally on the upper side of the top closure wall 8c of the container 8 and has a shortage of material 23 at the opposite ends along the edge leading to the top closure wall 8c of the container 8 that confer adequate freedom of elastic flexion.

The ends of the open, curved plate 22 have enlargements 24 on their inner side adapted to retain the hollow cylindrical protrusion 19 once it is inserted into the first portion 18a of the second hole 18.

The jug 1 is also fitted with at least one rotation stroke limiter 25 which limits the angular excursion between the top closure wall 8c of the container 8 and the bottom closure wall 9c of the cover 9.

The first rotation stroke limiter 25 is formed by a pin 26 that extends from the lower side of the bottom closure wall 9c of the cover 9 and is slidably engaged in a closed slot 27 passing through the thickness of the top closure wall 8c of the container 8.

The slot 27 has a first portion 27a in the form of an arc which is concentric with the rotation pin 11 and a second portion 27b which is angled with respect to the first portion 27a and serving for the connection and disconnection of the cover 9 from the container 8.

A second rotation stroke limiter 28 is formed by a pin 29 that extends from the upper side of the top closure wall 8c of the container 8 and is slidably engaged in a second closed slot 30 passing through the thickness of the bottom closure wall 9c of the cover 9.

The slot 30 has a first portion 30a in the shape of an arc which is concentric with the rotation pin 11 and a second portion 30b which is angled with respect to the first portion 30a and serving for the connection and disconnection of the cover 9 from the container 8.

The cover 9 has an inlet 31 for steam into the chamber 10 and an outlet 32 for hot and/or frothed milk from the chamber 10.

The cover 9 further comprises an inlet (not shown) for the entry of air into the chamber 10 and a knob 35 connected to a shutter (not shown) for the partialisation of the flow in the air inlet.

Various types of external heated and/or frothed milk terminals which can be oriented directly toward the dispensing area below the external coffee dispenser 4 can be connected to the outlet 32 for hot and/or frothed milk of the chamber 10.

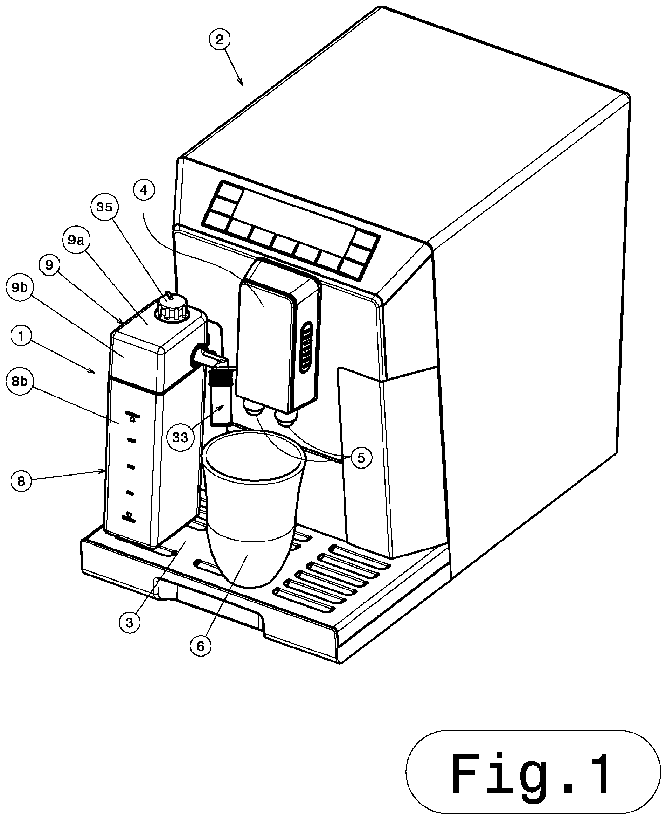

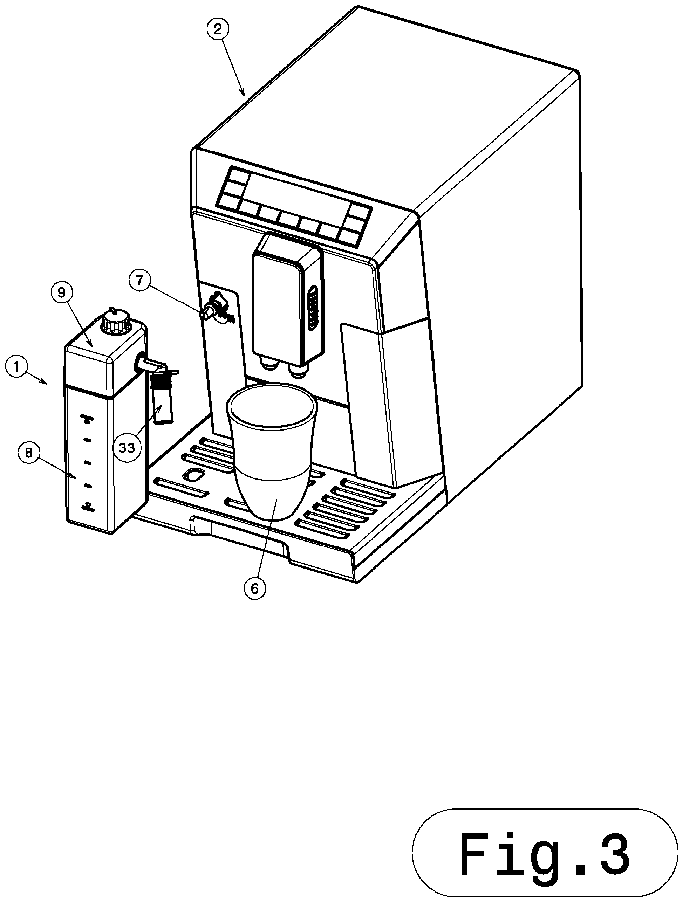

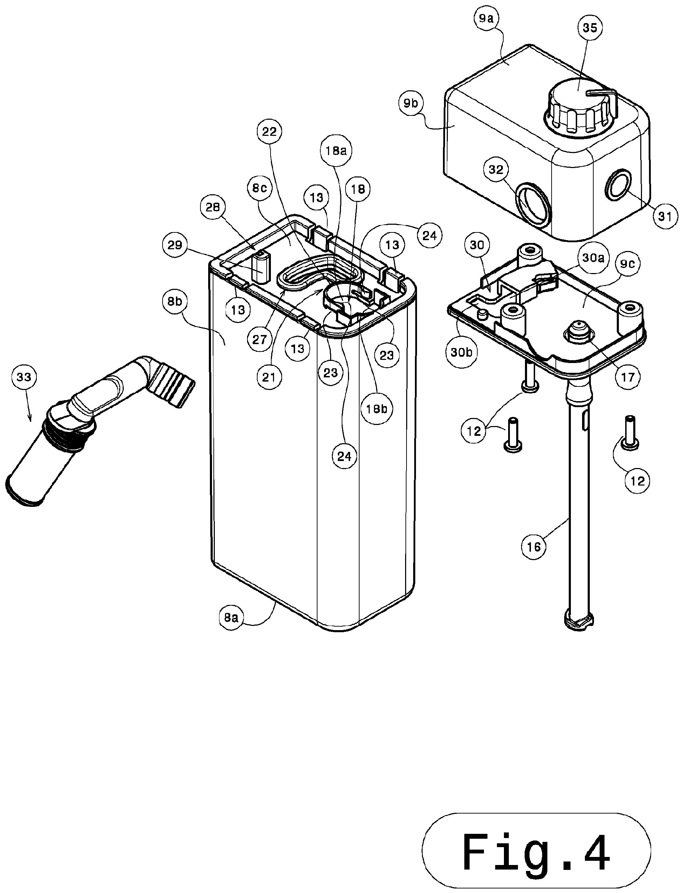

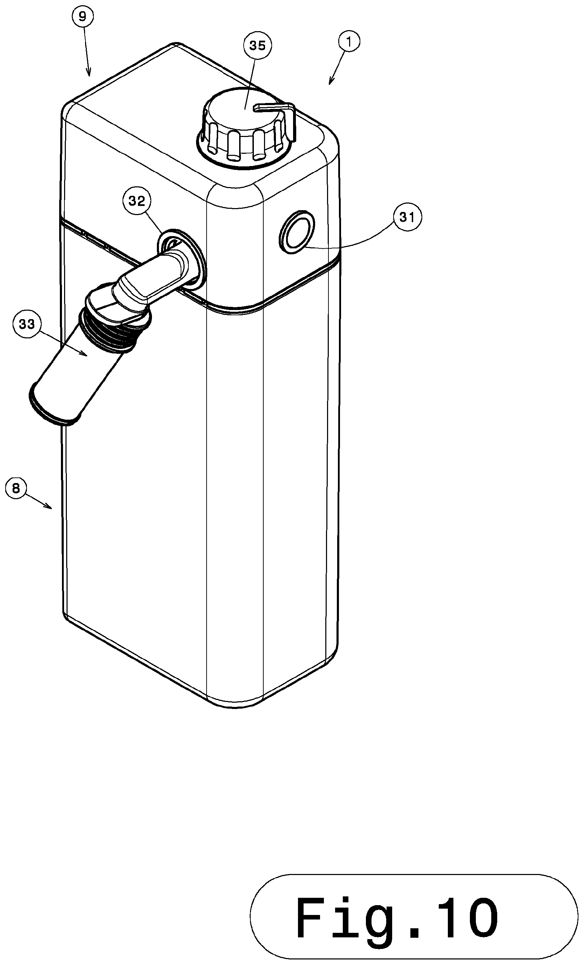

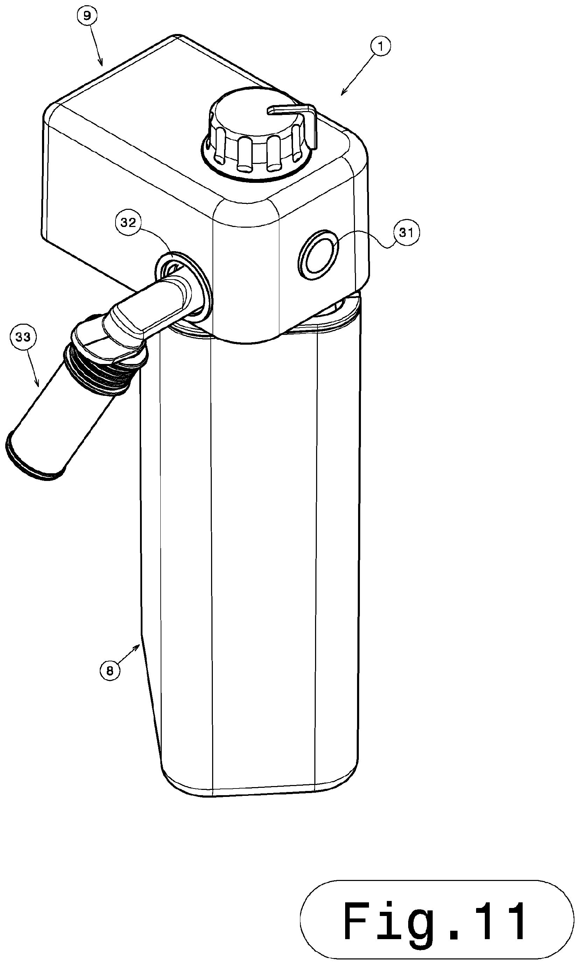

For example, as shown in figures 1 - 4, 10, 11, a terminal 33 can be provided which is connected to the outlet 32 in an articulated manner.

The terminal 33 has only one outlet hole for dispensing into only one cup. In this case it is possible to simultaneously prepare a drink with coffee and a drink with coffee and milk.

Naturally it is possible to provide a terminal which also has multiple outlet holes to dispense in multiple cups.

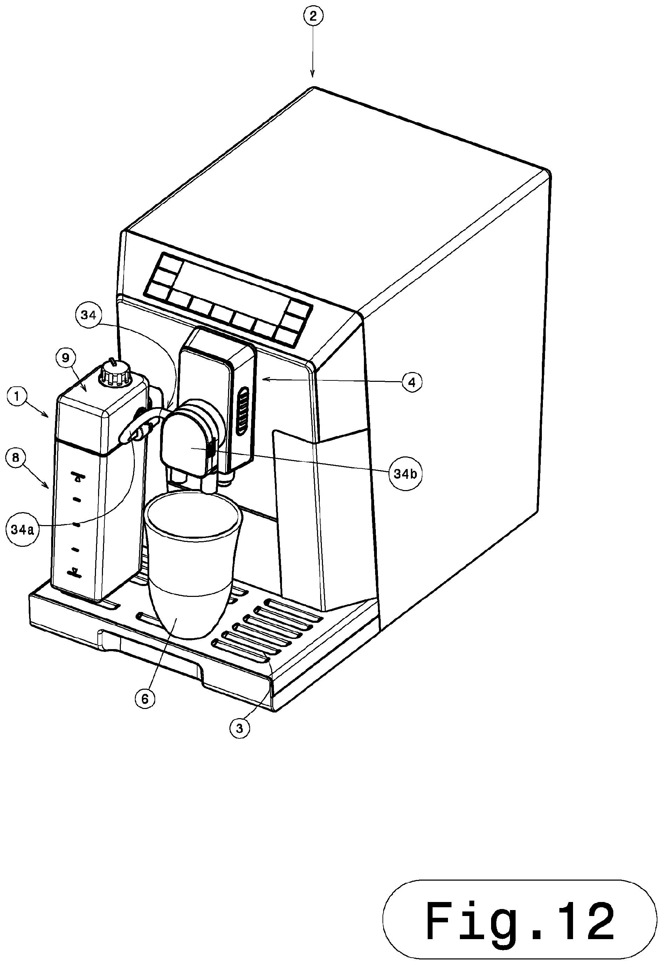

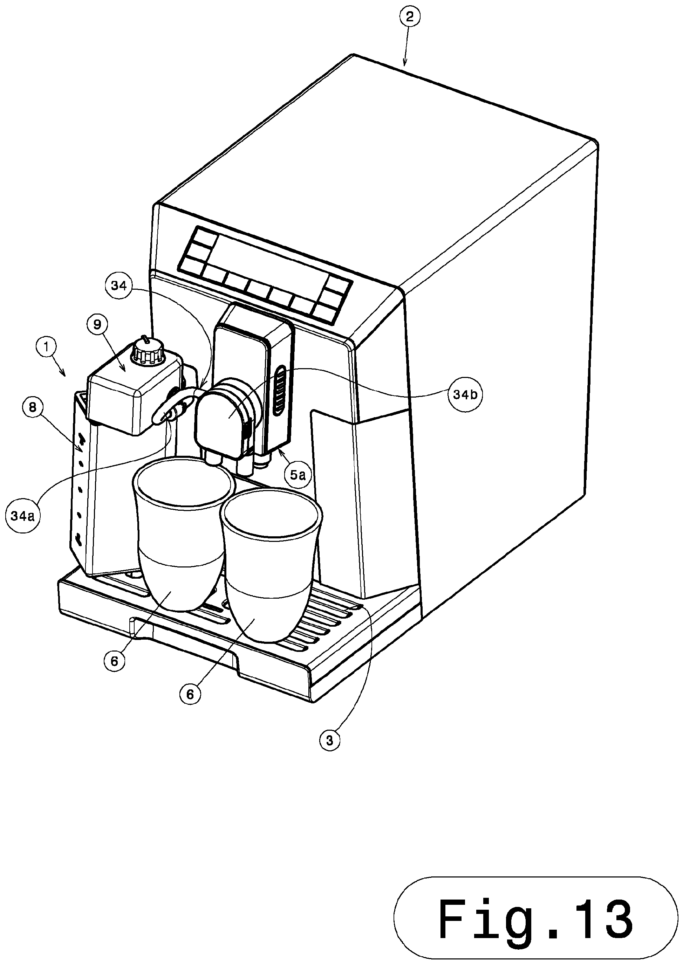

For example, as shown in figures 12, 13, a flexible terminal 34 can be provided which is integrally connected to the external coffee dispenser 4, but in a disengageable manner.

The releasable connection between the two parts can be of the mechanical or magnetic type.

In this case the flexible terminal 34 has a flexible tube 34a and a head 34b equipped with two outlet holes. In this case it is possible to simultaneously prepare two drinks with coffee and milk.

Considering figure 1, it can be noted that with the actual configuration of the jug 1 it is possible to dispense into only a single cup 6 in the preparation of a beverage with coffee and milk, as the space occupied by the jug 1 on the cup resting surface 3 does not leave space available for the positioning of another cup 6.

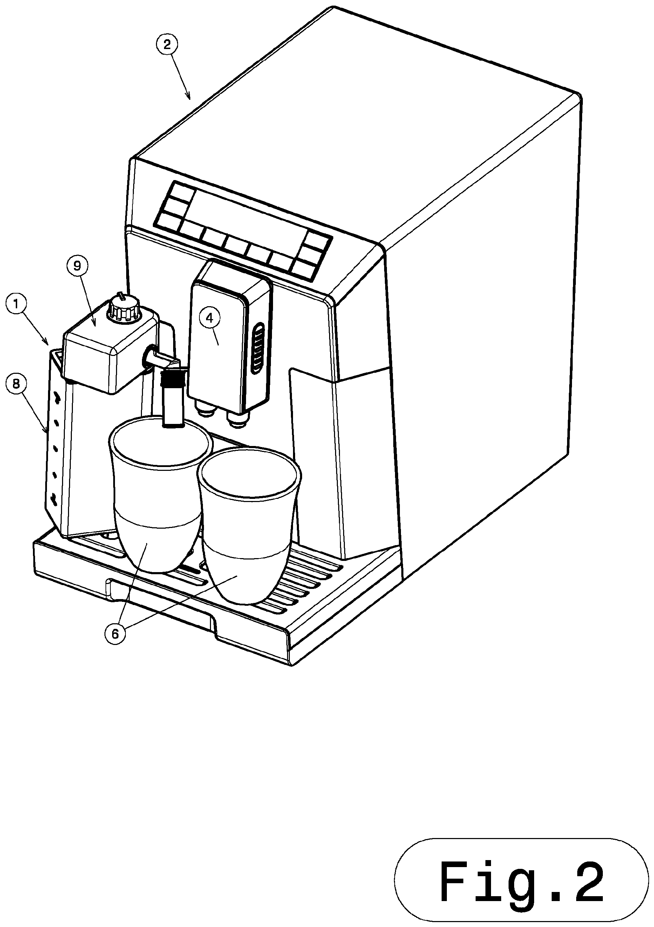

In order to be able to simultaneously dispense a coffee beverage in a cup 6 and a coffee and milk beverage in another cup 6, as shown in figure 2, the initial configuration of the jug 1 must be changed by rotating the container 8 with respect to the cover 8 according to the vertical axis defined by the rotation pin 11.

In the passage from one configuration to the other the cover 9 remains stationary, since it is rigidly connected to the steam nozzle 7 of the machine 7 which is generally fixed, while by rotating away from the dispensing area below the external coffee dispenser 4, the container 8 moves laterally toward the outside of the cup resting surface 3.

In the final configuration of the jug 1, it is possible that at least part of the bottom wall 8a of the container 8 protrudes from the cup resting surface 3.

In the final configuration of the jug 1, it is therefore possible to free the necessary space for the positioning also of the second cup 6 in the dispensing area below the external coffee dispenser 4.

Obviously the jug 1 can have different configurations, each of which corresponds to a different resting area for the container 8 on the cup resting surface 3.

In substance it is possible to free an additional portion of the cup resting surface 3 by modifying the configuration of the jug 1 when an increase in the number and/or size of the cups on the cup resting surface 3 is desired, in which to simultaneously dispense the coffee.

The connection of the cover 9 on the container 8 in the specific case shown takes place in the following manner.

The bottom closure wall 9c of the cover 9 and the top closure wall 8c of the container 8 are placed on a parallel lying plane and with the same angular orientation on the plane but in a slightly-offset position wherein the rotation pin 11 is aligned with the second portion 18b of the hole 18.

The cover 9 and the container 8 are translated toward each other in a direction parallel to the axis of the rotation pin 11 until the two perimeter frames 14, 15 come into contact.

During this first translation, first the milk inlet tube 16 and then the rotation pin 11 are inserted through the second portion 18b of the hole 18, the first rotation stroke limiter 25 is inserted in the second portion 27b of the first slot 27 and the second rotation stroke limiter 28 is inserted in the second portion 30b of the second slot 30.

At this point the cover 9 and the container 8 are translated toward one another in a direction which is orthogonal to the axis of the rotation pin 11 up to perfectly match the two perimeter frames 14, 15.

During this second translation which is orthogonal to the first translation, the rotation pin 11 passes from the second portion 18b of the hole 18 to the first portion 18a of the hole 18, also engaging the collar 27 that receives it by first stretching and then elastically retracting its ends and at the same time the initially-free coupling members 20 couple the lower side of the top closure wall 8c of the container 8.

Moreover the first rotation stroke limiter 25 slides along the second portion 27b of the first slot 27 up to reaching an end of the first portion 27a of the first slot 27, and similarly the second rotation stroke limiter 28 slides along the second portion 30b of the second slot 30 up to reaching an end of the first portion 30a of the second slot 30.

In substance during the second translation the second portion 27b of the first slot 27 and the second portion 30b of the second slot 30 act as parallel translation guides of the cover 9 on the container 8 until the first rotation stroke limiter 25 reaches the first portion 27a of the first slot 27 and the second rotation stroke limiter 28 reaches the first portion 30a of the second slot 30 and the cover 9 is thus free to rotate with respect to the container 8.

The disconnection of the cover 9 from the container 8 takes place with an inverse operation to that described above.

The jug for heating and/or frothing milk as conceived herein is susceptible to many modifications and variations falling within the scope of the appended claims.

In practice the materials used, as well as the dimensions, can be any according to the needs and the state of the art.

## Claims

1. A jug (1) for the heating and/or frothing of milk, comprising a container (8) for containing the milk, equipped with a box-shaped cover (9) on the top, housing a chamber (10) for heating and/or frothing milk withdrawn from said container (8), comprising a articulated connecting means between said cover (9) and said container (8), said jug (1) having a plurality of configurations in each of which said cover (9) has a different arrangement with respect to said container (8), each configuration of said jug (1) being associated with a corresponding state of said articulated connecting means, **characterised in that** said cover (9) has an inlet for steam (31) into said chamber (10) and an outlet (32) for hot and/or frothed milk from said chamber (10) .

2. The jug (1) for the heating and/or frothing of milk according to claim 1, **characterised in that** said articulated connection means comprises a rotation pin (11).

3. The jug (1) for the heating and/or frothing of milk, according to any one of the preceding claims, **characterised in that** said cover (9) has a bottom closure wall (9c) and said container (8) has a top closure wall (8c), and said rotation pin (11) connects said top closure wall (8c) of said container (8) to said bottom closure wall (9c) of said cover (9)..

4. The jug (1) for the heating and/or frothing of milk according to the preceding claim, **characterised in that** said bottom closure wall (9c) of said cover (9) and said top closure wall (8c) of said container (8) are flat, parallel walls and said rotation pin (11) is orthogonal to their lying plane.

5. The jug (1) for the heating and/or frothing of milk according to the preceding claim , **characterised in that** configurations with different space requirements of said jug (1) correspond to different rotation angles between said bottom closure wall (9c) of said cover (9) and said top closure wall (8c) of said container (8).

6. The jug (1) for the heating and/or frothing of milk according to any one of claims from 3 to 5, **characterised in that** a milk supply tube (16) is connected to said chamber (10) that extends into said milk container (8) and is placed through a first through hole (17) of said bottom closure wall (9c) of said cover (9) and through a second through hole (18) of said top closure wall (8c) of said container (8).

7. The jug (1) for the heating and/or frothing of milk according to the preceding claim, **characterised in that** said rotation pin (11) is formed by an axially hollow cylindrical protrusion (19) of said bottom closure wall (9c) of said cover (9) that surrounds said first hole (17) and extends through said second hole (18).

8. The jug (1) for the heating and/or frothing of milk according to the preceding claim, **characterised in that** said second hole (18) has a first portion (18a) joined to said hollow cylindrical protrusion (19).

9. The jug (1) for the heating and/or frothing of milk according to the preceding claim, **characterised in that** said hollow cylindrical protrusion (19) has one or more members (20) on the outside for coupling to said top closure wall (8c) of said container (8).

10. The jug (1) for the heating and/or frothing of milk according to any one of claims 8 and 9, **characterised in that** said second hole (18) has a second portion (18b) serving for the introduction and the extraction of said hollow cylindrical protrusion (19) from the first portion (18a) for the connection and disconnection of said cover (9) from said container (8).

11. The jug (1) for the heating and/or frothing of milk according to the preceding claim, **characterised in that** said top closure wall (8c) of said container (8) has a collar (21) which is elastically yielding for retaining said hollow cylindrical protrusion (19) in said first portion (18a) of said second hole (18).

12. The jug (1) for the heating and/or frothing of milk according to any one of claims from 3 to 11, **characterised in that** it has at least one rotation stroke limiter (25) between said top closure wall of said container and said bottom closure wall of said cover.

13. The jug (1) for the heating and/or frothing of milk according to any one of claims from 3 to 12, **characterised in that** said bottom closure wall (9c) of said cover (9) and said top closure wall (8c) of said container (8) are constrained in an eccentric position by said rotation pin (11).

14. The jug (1) for the heating and/or frothing of milk according to any one of the preceding claims, **characterised in that** said outlet (32) for hot and/or frothed milk is connected to a swivel terminal (33,34) for external dispensing of heated and/or frothed milk, having one or more exit holes.

15. A coffee machine (2), **characterised in that** it has a jug (1) for the heating and/or frothing of milk according to any one of the preceding claims.

16. The coffee machine (2) according the preceding claim, comprising a cup resting surface (3), an external coffee dispenser (4) positioned above said cup resting surface (3) and a steam dispenser nozzle (7) positioned above said cup resting surface (3) and laterally with respect to said external coffee dispenser (4) and connected to said inlet for steam (31) in said chamber (10), **characterised in that** it is provided with a plurality of different resting zones of said container (8) on said cup resting surface (3), each resting zone being associated with a corresponding configuration of said jug (1).

17. A dispensing method with a coffee machine according to the preceding claim, **characterised in that** an additional portion of said cup resting surface (3) is freed, by modifying the configuration of said jug (1) when an increase in the number and/or size of the cups (6) resting on said cup resting surface (3) is desired where dispensing is done simultaneously.

## Patentansprüche

1. Kanne (1) zum Erwärmen und/oder Aufschäumen von Milch, umfassend einen Behälter (S) zum Enthalten der Milch, ausgestattet mit einem kastenförmigen Deckel (9) auf der Oberseite, aufnehmend eine Kammer (10) zum Erwärmen und/oder Aufschäumen von Milch, die aus dem Behälter (8) entnommen wird, umfassend gelenkige Verbindungsmittel zwischen dem Deckel (9) und dem Behälter (8), wobei die Kanne (1) eine Vielzahl von Auslegungen aufweist und der Deckel (9) in einer jeden dieser Auslegungen eine unterschiedliche Anordnung im Vergleich zum Behälter (8) aufweist, wobei eine jede Auslegung der Kanne (1) mit einem entsprechenden Zustand der gelenkigen Verbindungsmittel assoziiert ist, **dadurch gekennzeichnet, dass** der Deckel (9) einen Einlass für Dampf (31) in die Kammer (10) und einen Auslass (32) für heiße und/oder aufgeschäumte Milch aus der Kammer (10) aufweist.

2. Kanne (1) zum Erwärmen und/oder Aufschäumen von Milch nach Anspruch 1, **dadurch gekennzeichnet, dass** die gelenkigen Verbindungsmittel einen Rotationszapfen (11) umfassen.

3. Kanne (1) zum Erwärmen und/oder Aufschäumen von Milch nach einem der vorhergehenden Ansprüche, **dadurch gekennzeichnet, dass** der Deckel (9) eine untere Verschlusswand (9c) aufweist und der Behälter (8) eine obere Verschlusswand (8c) aufweist und der Rotationszapfen (11) die obere Verschlusswand (8c) des Behälters (8) mit der unteren Verschlusswand (9c) des Deckels (9) verbindet.

4. Kanne (1) zum Erwärmen und/oder Aufschäumen von Milch nach dem vorhergehenden Anspruch, **dadurch gekennzeichnet, dass** die untere Verschlusswand (9c) des Deckels (9) und die obere Verschlusswand (8c) des Behälters (8) flache, parallele Wände sind und der Rotationszapfen (11) rechtwinkelig zu deren Liegeebene angeordnet ist.

5. Kanne (1) zum Erwärmen und/oder Aufschäumen von Milch nach dem vorhergehenden Anspruch, **dadurch gekennzeichnet, dass** Auslegungen mit unterschiedlichen Raumanforderungen der Kanne (1) unterschiedlichen Rotationswinkeln zwischen der unteren Verschlusswand (9c) des Deckels (9) und der oberen Verschlusswand (8c) des Behälters (8) entsprechen.

6. Kanne (1) zum Erwärmen und/oder Aufschäumen von Milch nach einem der Ansprüche 3 bis 5, **dadurch gekennzeichnet, dass** ein Milchzuleitungsrohr (16) mit der Kammer (10) verbunden ist, das sich in den Milchbehälter (8) erstreckt und durch ein erstes Durchführungsloch (17) der unteren Verschlusswand (9c) des Deckels (9) und durch ein zweites Durchführungsloch (18) der oberen Verschlusswand (8c) des Behälters (8) platziert ist.

7. Kanne (1) zum Erwärmen und/oder Aufschäumen von Milch nach dem vorhergehenden Anspruch, **dadurch gekennzeichnet, dass** der Rotationszapfen (11) durch einen axial hohlen zylindrischen Vorsprung (19) der unteren Verschlusswand (9c) des Deckels (9) ausgeformt ist, der das erste Loch (17) umgibt und sich durch das zweite Loch (18) erstreckt.

8. Kanne (1) zum Erwärmen und/oder Aufschäumen von Milch nach dem vorhergehenden Anspruch, **dadurch gekennzeichnet, dass** das zweite Loch (18) einen ersten Abschnitt (18a) aufweist, der mit dem hohlen zylindrischen Vorsprung (19) zusammengefügt ist.

9. Kanne (1) zum Erwärmen und/oder Aufschäumen von Milch nach dem vorhergehenden Anspruch, **dadurch gekennzeichnet, dass** der hohle zylindrische Vorsprung (19) ein oder mehrere Elemente (20) an der Außenseite zum Kuppeln mit der oberen Verschlusswand (8c) des Behälters (8) aufweist.

10. Kanne (1) zum Erwärmen und/oder Aufschäumen von Milch nach einem der Ansprüche 8 und 9, **dadurch gekennzeichnet, dass** das zweite Loch (18) einen zweiten Abschnitt (18b) aufweist, der zum Einführen und Herausziehen des hohlen zylindrischen Vorsprungs (19) vom ersten Abschnitt (18) zum Verbinden und Trennen des Deckels (9) vom Behälter (8) dient.

11. Kanne (1) zum Erwärmen und/oder Aufschäumen von Milch nach dem vorhergehenden Anspruch, **dadurch gekennzeichnet, dass** die obere Verschlusswand (8c) des Behälters (8) einen Kragen (21) aufweist, der elastisch nachgebend ist, um den hohlen zylindrischen Vorsprung (18) im ersten Abschnitt (18a) des zweiten Lochs (18) zu halten.

12. Kanne (1) zum Erwärmen und/oder Aufschäumen von Milch nach einem der Ansprüche 3 bis 11, **dadurch gekennzeichnet, dass** sie mindestens eine Rotationshubbegrenzung (25) zwischen der oberen Verschlusswand des Behälters und der unteren Verschlusswand des Deckels aufweist.

13. Kanne (1) zum Erwärmen und/oder Aufschäumen von Milch nach einem der Ansprüche 3 bis 12, **dadurch gekennzeichnet, dass** die untere Verschlusswand (9c) des Deckels (9) und die obere Verschlusswand (8c) des Behälters (8) durch den Rotationszapfen (11) in einer exzentrischen Position befestigt sind.

14. Kanne (1) zum Erwärmen und/oder Aufschäumen von Milch nach einem der vorhergehenden Ansprüche, **dadurch gekennzeichnet, dass** der Auslass (32) für heiße und/oder aufgeschäumte Milch mit einem Drehanschluss (33, 34) verbunden ist, um erwärmte und/oder aufgeschäumte Milch extern auszugeben, aufweisend ein oder mehrere Austrittslöcher.

15. Kaffeemaschine (2), **dadurch gekennzeichnet, dass** sie eine Kanne (1) zum Erwärmen und/oder Aufschäumen von Milch nach einem der vorhergehenden Ansprüche aufweist.

16. Kaffeemaschine (2) nach dem vorhergehenden Anspruch, umfassend eine Tassenabstelloberfläche (3), eine externe Kaffeeausgabe (4), die über der Tassenabstelloberfläche (3) positioniert ist, und eine Dampfausgabedüse (7), die über der Tassenabstelloberfläche (3) und seitlich zur externen Kaffeeausgabe (4) positioniert und mit dem Einlass für Dampf (31) in die Kammer (10) verbunden ist, **dadurch gekennzeichnet, dass** sie mit einer Vielzahl von verschiedenen Abstellbereichen für den Behälter (8) auf der Tassenabstelloberfläche (3) versehen ist, wobei ein jeder Abstellbereich mit einer entsprechenden Auslegung der Kanne (1) assoziiert ist.

17. Ausgabeverfahren mit einer Kaffeemaschine nach dem vorhergehenden Anspruch, **dadurch gekennzeichnet, dass** ein zusätzlicher Abschnitt der Tassenabstelloberfläche (3) freigegeben wird, indem die Auslegung der Kanne (1) verändert wird, wenn eine Erhöhung der Anzahl und/oder der Größe der Tassen (6), die auf der Tassenabstelloberfläche (3) abgestellt werden, bei simultaner Ausgabe gewünscht wird.

## Revendications

1. Pot (1) pour chauffer et/ou faire mousser du lait, comprenant un récipient (S) servant à contenir le lait, équipé d'un couvercle en forme de boîte (9) sur le dessus, logeant une chambre (10) pour chauffer et/ou faire mousser le lait retiré dudit récipient (8), comprenant un moyen de raccordement articulé entre ledit couvercle (9) et ledit récipient (8), ledit pot (1) comportant une pluralité de configurations dans chacune desquelles ledit couvercle (9) possède un agencement différent par rapport audit récipient (8), chaque configuration dudit pot (1) étant associée à un état correspondant desdits moyens de raccordement articulés, **caractérisé en ce que** ledit couvercle (9) comporte une entrée pour la vapeur (31) dans ladite chambre (10) et une sortie (32) pour le lait chaud et/ou moussant de ladite chambre (10).

2. Pot (1) pour chauffer et/ou faire mousser du lait selon la revendication 1, **caractérisé en ce que** lesdits moyens de raccordement articulés comprennent un axe de rotation (11).

3. Pot (1) pour chauffer et/ou faire mousser du lait selon l'une quelconque des revendications précédentes, **caractérisé en ce que** ledit couvercle (9) comporte une paroi de fermeture inférieure (9c) et ledit récipient (8) comporte une paroi de fermeture supérieure (8c), et ledit axe de rotation (11) relie ladite paroi de fermeture supérieure (8c) dudit récipient (8) à ladite paroi de fermeture inférieure (9c) dudit couvercle (9).

4. Pot (1) pour chauffer et/ou faire mousser du lait selon la revendication précédente, **caractérisé en ce que** ladite paroi de fermeture inférieure (9c) dudit couvercle (9) et ladite paroi de fermeture supérieure (8c) dudit récipient (8) sont des parois plates et parallèles et ledit axe de rotation (11) est orthogonal à leur plan d'appui.

5. Pot (1) pour chauffer et/ou faire mousser du lait selon la revendication précédente, **caractérisé en ce que** des configurations avec différents besoins d'espace dudit pot (1) correspondent à différents angles de rotation entre ladite paroi de fermeture inférieure (9c) dudit couvercle (9) et ladite paroi de fermeture supérieure (8c) dudit récipient (8).

6. Pot (1) pour chauffer et/ou faire mousser du lait selon l'une quelconque des revendications de 3 à 5, **caractérisé en ce qu'**un tube d'alimentation en lait (16) est relié à ladite chambre (10) se prolongeant dans ledit récipient à lait (8) et est placé à travers un premier trou traversant (17) de ladite paroi de fermeture inférieure (9c) dudit couvercle (9) et à travers un second trou traversant (18) de ladite paroi de fermeture supérieure (8c) dudit récipient (8).

7. Pot (1) pour chauffer et/ou faire mousser du lait selon la revendication précédente, **caractérisé en ce que** ledit axe de rotation (11) est formé par une saillie cylindrique axialement creuse (19) de ladite paroi de fermeture inférieure (9c) dudit couvercle (9) qui entoure ledit premier trou (17) et se prolonge à travers ledit second trou (18).

8. Pot (1) pour chauffer et/ou faire mousser du lait selon la revendication précédente, **caractérisé en ce que** ledit second trou (18) comporte une première partie (18a) reliée à ladite saillie cylindrique creuse (19).

9. Pot (1) pour chauffer et/ou faire mousser du lait selon la revendication précédente, **caractérisé en ce que** ladite saillie cylindrique creuse (19) comporte un ou plusieurs éléments (20) sur l'extérieur pour le couplage à ladite paroi de fermeture supérieure (8c) dudit récipient (8).

10. Pot (1) pour chauffer et/ou faire mousser du lait selon l'une quelconque des revendications 8 et 9, **caractérisé en ce que** ledit second trou (18) comporte une seconde partie (18b) servant à l'introduction et à l'extraction de ladite saillie cylindrique creuse (19) de la première partie (18a) pour le raccordement et le décrochage dudit couvercle (9) dudit récipient (8).

11. Pot (1) pour chauffer et/ou faire mousser du lait selon la revendication précédente, **caractérisé en ce que** ladite paroi de fermeture supérieure (8c) dudit récipient (8) comporte un collier (21) étant élastiquement souple pour retenir ladite saillie cylindrique creuse (19) dans ladite première partie (18a) dudit second trou (18).

12. Pot (1) pour chauffer et/ou faire mousser du lait selon l'une quelconque des revendications de 3 à 11, **caractérisé en ce qu'**il comporte au moins un limiteur de course de rotation (25) entre ladite paroi de fermeture supérieure dudit récipient et ladite paroi de fermeture inférieure dudit couvercle.

13. Pot (1) pour chauffer et/ou faire mousser du lait selon l'une quelconque des revendications de 3 à 12, **caractérisé en ce que** ladite paroi de fermeture inférieure (9c) dudit couvercle (9) et ladite paroi de fermeture supérieure (8c) dudit récipient (8) sont solidaires dans une position excentrée par ledit axe de rotation (11).

14. Pot (1) pour chauffer et/ou faire mousser du lait selon l'une quelconque des revendications précédentes, **caractérisé en ce que** ladite sortie (32) pour le lait chaud et/ou mousseux est reliée à un terminal pivotant (33, 34) pour la distribution externe de lait chauffé et/ou mousseux, comportant un ou plusieurs trous de sortie.

15. Machine à café (2), **caractérisée en ce qu'**elle comporte un pot (1) pour chauffer et/ou faire mousser du lait selon l'une quelconque des revendications précédentes.

16. Machine à café (2) selon la revendication précédente, comprenant une surface d'appui de tasse (3), un distributeur de café externe (4) positionné au-dessus de ladite surface d'appui de tasse (3) et une buse de distribution de vapeur (7) positionnée au-dessus de ladite surface d'appui de tasse (3) et latéralement par rapport audit distributeur de café externe (4) et reliée à ladite entrée de vapeur (31) dans ladite chambre (10), **caractérisée en ce qu'**elle est pourvu d'une pluralité de zones d'appui différentes dudit récipient (8) sur ladite surface d'appui de tasse (3), chaque zone d'appui étant associée à une configuration correspondante dudit pot (1).

17. Procédé de distribution avec une machine à café selon la revendication précédente, **caractérisé en ce qu'**une partie supplémentaire de ladite surface d'appui de tasse (3) est libérée, en modifiant la configuration dudit pot (1) lorsqu'une augmentation du nombre et/ou de la taille des tasses (6) reposant sur ladite surface d'appui de tasse (3) est souhaitée où la distribution est effectuée simultanément.
